# EUROPEAN PATENT SPECIFICATION

(11) **EP 1 177 125 B1**
(45) Date of publication and mention of the grant of the patent: **16.04.2003**
(21) Application number: 00927961.3
(22) Date of filing: 09.05.2000
(51) Int. Cl.: B62D 33/067

(54) **VEHICLE WITH A TILTABLE CAB**
KRAFTFAHRZEUG MIT KIPPBARER KABINE
VEHICULE EQUIPE D'UNE CABINE BASCULANTE

(30) Priority: 10.05.1999 NL 1012014
(43) Date of publication of application: 06.02.2002
(60) Divisional application: 02079883.1
(73) Proprietor: Actuant Corporation, Glendale, Wisconsin 53209-3703 (US)
(72) Inventor: DAMHUIS, Erwin, Bernardus, Johannes, NL-7555 KK Hengelo (NL)
(74) Representative: Brookhuis, Hendrik Jan Arnold
(86) International application number: NL0000300
(87) International publication number: WO00068063

(56) References cited:
- WO-A-98/17522
- DE-A- 2 163 737
- US-A- 3 985 194

## Description

The present invention relates to the tilting of the cab of a vehicle, which cab can be tilted between a driving position, in which the vehicle can be driven normally, and a tilted-forward position, in which, for example, maintenance can be carried out on the engine located beneath the cab.

In view of the relatively high weight of tiltable (lorry) cabs, nowadays virtually all lorries are fitted with a hydraulic tilting device for tilting the cab, the tilting device comprising a hydraulic tilting actuator and a pump which is mounted on the chassis of the vehicle. The hydraulic tilting actuator may be a linear actuator of the double-acting type with two connections, which are each connected to an associated working chamber of the actuator. There are also vehicles in which the hydraulic tilting actuator is of the single-acting type having a single working chamber and an associated single connection.

US 3 985 194 discloses a hydraulic tilting device for tilting the cab of a vehicle. This tilting device comprises a double-acting hydraulic tilting actuator which is arranged between the chassis and the cab. Furthermore, a pump is arranged on the chassis, in this case comprising in combination a hand pump and an air-driven pump, for supplying pressurized hydraulic fluid to the hydraulic tilting actuator. The pump is connected to reservoir for hydraulic fluid. To make the hydraulic tilting actuator extend or retract as desired, an actuable hydraulic valve is provided in the fluid lines between the pump and the connections of the hydraulic tilting actuator.

In the generally known vehicles according to the preamble of claim 1, the pump is fixedly mounted on the chassis in such a manner that the pump is permanently exposed to the influences of weather and wind. However, at the moment at which tilting of the cab is desired, the pump has to operate reliably. This leads to a relatively expensive design of the pump, which is in fact undesirable in view of the low freque with which it is used. Furthermore, the need to tilt the cab is falling all the time, in view of the increasing quality of the vehicles and the lengthening of the service intervals.

The object of the present invention is to provide a hydraulic cab tilting device which overcomes the above problem.

According to a first aspect of the invention, it is provided for each connection of the hydraulic tilting actuator fitted between the cab and the chassis, if appropriate via an associated fluid line, to be connected directly, without the intervention of a pump mounted on the vehicle, to an associated first coupling element which is arranged on the vehicle, which first coupling element - if the tilting actuator is to be actuated - can be coupled to a second coupling element which is associated with a pump unit for supplying pressurized hydraulic fluid to the tilting device.

In other words, the first aspect of the invention proposes to dispense with the hydraulic pump which, in known vehicles, is fixedly mounted on the vehicle specifically for tilting the cab and to connect a separate pump to the tilting actuator only when it is desired to tilt the cab. The separate pump may, for example, be a pump which is arranged at a maintenance workshop or a pump which is carried in a maintenance service vehicle. Preferably, there is provision for the pump to be a displaceable, in particular portable, pump which is carried on the particular vehicle with the tiltable cab. Preferably the vehicle is provided with a storage compartment for the pump unit.

It is particularly advantageous for the pump to form part of a hydraulic jack which belongs to the vehicle with the tiltable cab and can also be used to lift the vehicle, for example in the event of a flat tyre. In addition to the pump, the jack then also comprises a hydraulic lifting actuator for lifting a part of the vehicle, such as an axle of the vehicle. The latter solution is described in claim 1. In an embodiment which is advantageous in practice, the jack is designed as a hydraulic bottle jack with a hand pump and a single-acting or double-acting hydraulic lifting actuator.

The first aspect of the present invention also relates to the combination of a vehicle and a pump according to claim 1.

Furthermore, advantageously, the first and second coupling elements are each provided with a closure member, which closure members are designed to keep the corresponding coupling element closed when the coupling members are disconnected and open the passage for hydraulic fluid only when the first and second coupling elements are coupled to one another. In this way, it is possible for that part of the hydraulic system which is formed by the tilting actuator and any fluid lines connected thereto to be filled with hydraulic fluid while the remaining part of the system, formed by the pump and any fluid lines connected thereto, is also filled with hydraulic fluid. The closure members also prevent hydraulic fluid from leaking out and prevent undesirable air from entering the hydraulic system.

According to a second aspect, the present invention provides a jack according to claim 5.

It will be clear that the various aspects of the invention can be used in different combinations.

The various aspects of the present invention and advantageous embodiments thereof are described in the claims and the following description with reference to the drawing, in which:
Fig. 1 shows a diagrammatic side view of the front section of a vehicle with a driver's cab tilted forwards and a hydraulic tilting device according to the prior art,
Fig. 2 shows a view corresponding to Figure 1 of a vehicle according to the first aspect of the invention,
Figs. 3a and 3b respectively shown the hydraulic circuit diagram and a diagrammatic representation of the first exemplary embodiment of the hydraulic tilting means for tilting the cab of a vehicle according to the first and second aspects of the invention, and
Figs. 4a and 4b show similar views to Figures 3a and 3b, of a second exemplary embodiment of the hydraulic tilting means.

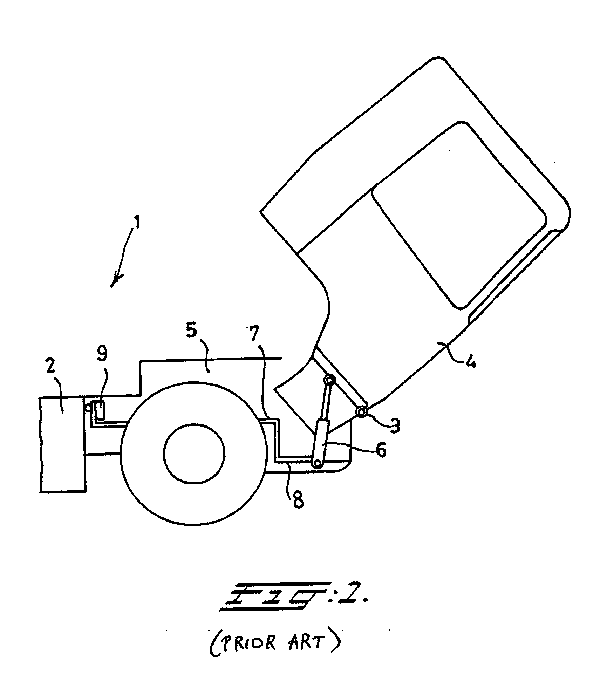

Figure 1 diagrammatically depicts the front section of a vehicle 1, having a chassis 2 and a driver's cab 4 which can tilt with respect to the chassis 2 about pivot means 3 and in this drawing is shown in a tilted-forward position. The cab 4 is in this case tiltable in order to provide access to the engine 5 of the vehicle 1. Furthermore, a hydraulic tilting actuator 6, which is mounted between the chassis 2 and the cab 4 and is used to tilt the cab 4, can be seen.

The tilting actuator 6 is in this case a double-acting linear actuator with a piston rod which can be extended and retracted, the piston delimiting two working chambers of variable volume. The tilting actuator 6 has two connections, which are each in communication with one of the working chambers, for the supply and/or removal of hydraulic fluid.

Two hydraulic fluid lines 7, 8, which are mounted on the chassis 2, connect to these connections of the tilting actuator 6.

Figure 1 also shows, as is generally known, a pump unit 9 with a hydraulic pump and with an associated reservoir for hydraulic fluid, which is mounted on the chassis 2 of the vehicle. The pump unit 9 has two connections, to which the lines 7, 8 are fixedly connected, and furthermore has an actuable valve, so that pressurized hydraulic fluid can be supplied to one or other working chamber of the tilting actuator 6 as desired.

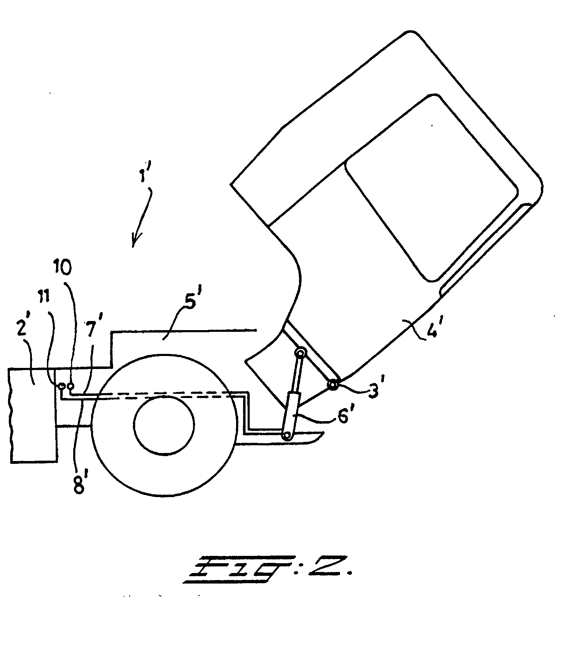

In Figure 2, components which correspond to components in Figure 1 are provided with the same reference numeral with the addition of a prime symbol. The most significant difference is that the pump unit 9 mounted on the chassis is absent. Furthermore, a first coupling element 10, 11 is arranged on the end of each of the lines 7', 8', which first coupling elements 10, 11 - if the tilting actuator 6 is to be actuated - can each be coupled to a second coupling element, which belongs to a pump unit (not shown in Figure 2) with a pump for supplying pressurized hydraulic fluid to the tilting actuator 6 and with a reservoir for hydraulic fluid. Each connection of the tilting actuator 6 is thus directly connected, via the associated line but without the intervention of a pump, to an associated first coupling element arranged on the vehicle.

The pump unit is preferably a displaceable pump unit belonging to the vehicle, for example a wheeled pump unit but preferably a portable pump unit. The pump unit may comprise a manually actuated pump, but in an expedient variant the pump is electrically driven. If appropriate, the pump may be driven both manually and electrically.

In a preferred embodiment, the pump unit forms part of a hydraulic jack which belongs to the vehicle and thus can also be used to lift a part of the vehicle in the event of problems, for example a flat tyre.

It will be clear that the coupling elements 10, 11 may also be arranged directly on the actuator 6, so that the lines 7', 8' may be dispensed with.

The first and second coupling elements preferably form a quick-acting coupling. Preferably, the first and second coupling elements are each provided with a closure member, which closure member keeps the associated coupling element closed and opens it when the first and second coupling elements are coupled to one another. Such a design of the coupling elements is generally known.

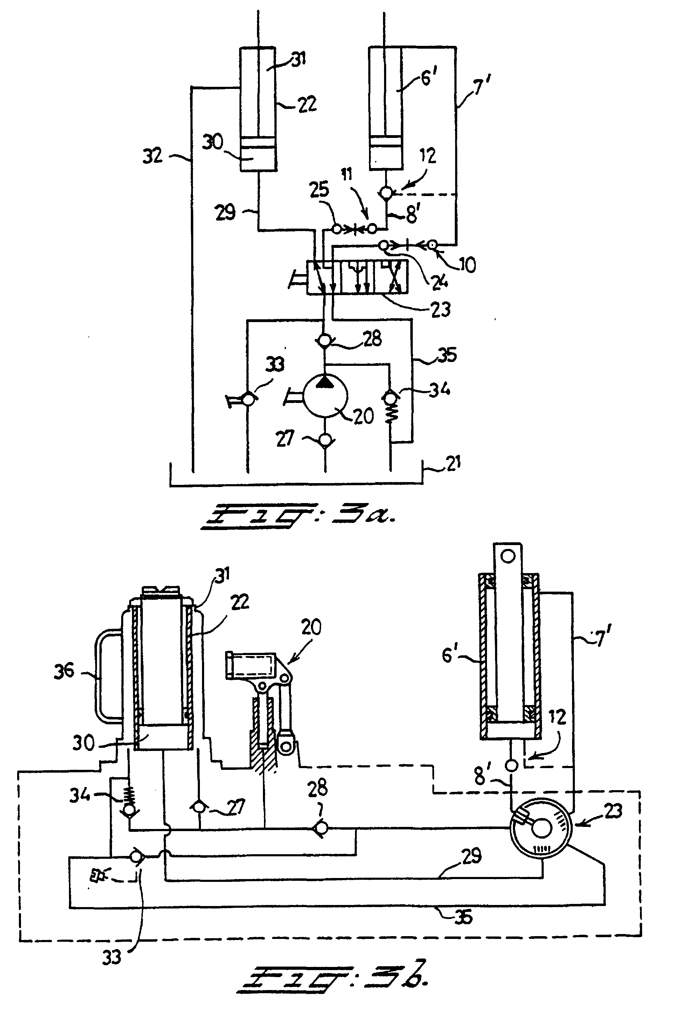

Figures 3a and 3b show a first exemplary embodiment of a hydraulic tilting device for tilting the cab of a vehicle. The figures show the actuator 6' from Figure 2 and the lines 7' and 8' and (in Figure 3a) the first coupling elements 10, 11 of these lines. The tilting actuator 6' is provided, in a manner known per se, with a non-return valve 12 which can be opened hydraulically and prevents the piston rod from retracting unless hydraulic fluid is being fed to the actuator 6' via the line 7' in order for the piston rod to be retracted deliberately. The non-return valve 12 also prevents the piston rod from retracting if there is a leak in the line 8'.

Figure 3a furthermore diagrammatically depicts a pump unit which can be coupled to the actuator 6'. The pump unit is portable and in this case is designed as a hydraulic jack for lifting the vehicle. The pump unit comprises a manually actuable pump 20, a reservoir 21 for hydraulic fluid, a lifting actuator 22 and an actuable valve 23, as well as second coupling elements 24, 25, which can be coupled to the first coupling elements 10, 11 of the tilting actuator 6'. The coupling elements 10, 11, 24, 25, in pairs, form a quick-release coupling with a closure member in each coupling element, which member opens the passage when the coupling elements are coupled to one another and closes the passage when the coupling is released.

The pump 20 sucks fluid out of the reservoir via non-return valve 27, and the fluid which has been pressurized leaves the pump 20 via non-return valve 28.

The valve 23 is a manually actuable control valve, which, in a first position, connects the delivery side of the pump 20 to the lifting actuator and the coupling elements 24, 25 to the reservoir 21. In the second position, the valve 23 connects the delivery side of the pump to the coupling element 25, and in the third position to the coupling elements 24, in each of which cases the other coupling element is connected to the reservoir 21 via line 35.

The lifting actuator 22 is designed as a single-acting actuator. A line 29 connects working chamber 30 to the valve 23. A line 32 is connected to the reservoir 21 and is used to limit the outgoing travel of the actuator.

When hydraulic fluid is supplied to the chamber 30, the lifting actuator 22 extends. To allow the extended actuator 22 to be retracted, manually actuable valve 33 is opened, with the valve 23 in the first position. Valve 34 serves as a pressure-release valve in order to prevent excess pressure.

Figure 3b diagrammatically shows that the pump 20 of the pump unit is a manually actuable plunger pump with lever actuation. This pump 20 forms a portable unit, provided with a handle 36, together with the lifting actuator 22, which unit resembles a bottle jack which is known per se. Only the top part of the outer contour of this bottle jack is shown in solid lines and true to scale, the bottom part being indicated purely diagrammatically by dashed lines, in order to make it clear which components form part of the pump unit. Incidentally, the coupling elements 10, 11, 24, 25 have been omitted from Figure 3b.

The pump unit can be used as a stand-alone bottle jack for lifting the vehicle, by moving the valve 23 into the first position, so that the delivery side of the pump 20 is connected to the chamber 30 of the lifting actuator 22. If it is desired to tilt the cab 4' of the vehicle shown in Figure 2, the pump unit is connected to the lines 7' and 8'. To tilt the cab forwards, the valve 23 is then moved into the second position, so that the delivery side of the pump 20 is connected to a bottom-side chamber of the actuator 6', leading to the actuator extending. In order for the cab to be tilted back to the driving position, the valve 23 is moved into the third position. Then, pressurized hydraulic fluid is fed to line 7' via the pump 20 and to the piston-rod-side chamber of the actuator 6' via this line, the valve 12 then opening due to the pressure in the line 7'.

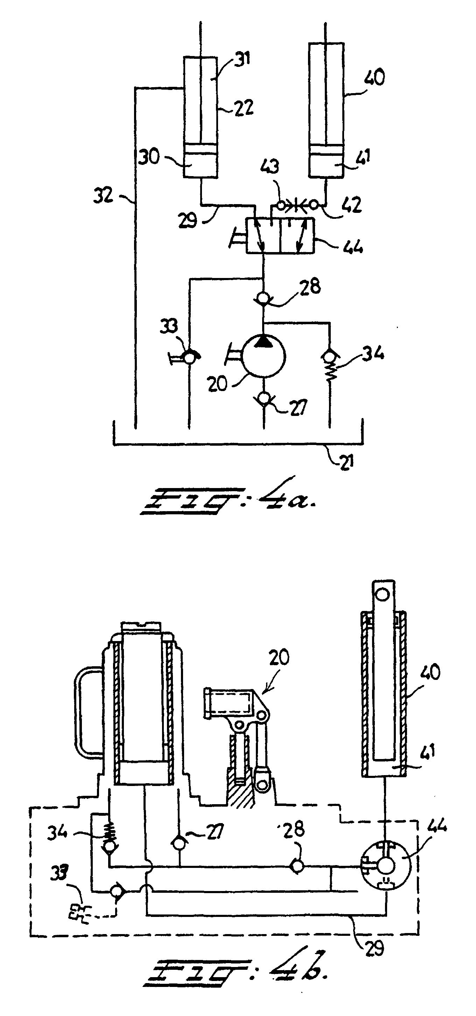

Figures 4a and 4b show a variant of the solution shown in Figures 3a and 3b, corresponding components being provided with the same reference numerals. The major difference is that the tilting actuator 40 is single-acting rather than double-acting, having a single working chamber 11 and an associated first coupling element 42 in the line leading to this working chamber. The use of a single-acting tilting actuator is possible, in particular, if the cab does not have to be tilted so far forwards that the centre of gravity passes over the top of the tilting axis of the cab. In some cases, however, even that will be permissible, in particular if the spring suspension means of the cab provide a restoring force in the tilted-forward position of the cab.

The pump unit is adapted to the single-acting actuator, in that only one second coupling element 43 is provided and by means of a simple valve 44. Furthermore, the valve 33 has to be opened in order for the tilting actuator 40 to retract.

This simple pump unit can also be used as a jack and, as shown in Figure 4b, may exhibit a strong resemblance to a bottle jack.

It will be clear that the inventive idea may be implemented in many different forms, for example with a tilting device which, in addition to one or more tilting actuators, also comprises one or more hydraulically actuated locks for locking the cab in the driving position.

## Claims

1. Vehicle comprising a chassis (2') and a cab (4') which can be tilted with respect to the chassis, a hydraulic tilting actuator (6') being arranged between the chassis (2') and the cab (4') for tilting the cab, which hydraulic tilting actuator (6') has one or more connections for the supply and/or removal of hydraulic fluid, the vehicle furthermore having a separate, preferably portable or wheeled, hydraulic jack for lifting a part of the vehicle, for example in the event of a flat tyre, which jack comprises a hydraulic lifting actuator (22) and a pump (20) for supplying pressurized hydraulic fluid to the hydraulic lifting actuator (6'), **characterized in that** each connection of the hydraulic tilting actuator (6') is connected to an associated first coupling element (10, 11) arranged on the vehicle, and **in that** the jack is provided with one or more second coupling elements (24, 25), which can each be coupled to a first coupling element (10, 11), in such a manner that the pump (20) of the jack can be connected to the hydraulic tilting actuator (6') and the cab (4') can be tilted by actuation of the pump (20) of the jack.

2. Vehicle according to claim 1, in which the jack is provided with a valve which, in a first position, connects the pump to the lifting actuator and, in the second position, to the second coupling element or the second coupling elements of the jack.

3. Vehicle according to claim 1 or 2, in which an actuable non-return valve is provided between the first coupling element and the connection of the tilting actuator which, when hydraulic fluid is fed to it, leads to the cab being tilted forwards.

4. Vehicle according to one or more of claims 1-3, in which the first and second coupling elements are each provided with a closure member, which closure members are each adapted to keep the corresponding coupling element closed when said coupling elements are disconnected and to open a fluid passage when the first and second coupling elements are coupled to one another.

5. Hydraulic jack, preferably a bottle jack, comprising a hydraulic lifting actuator, a pump for supplying pressurized hydraulic fluid to the lifting actuator, and a reservoir for hydraulic fluid, which lifting actuator, pump and reservoir are rigidly connected to one another and form a portable unit, the unit being designed to be placed on the ground in order to lift an object, in particular a vehicle, **characterized in that** the jack is provided with one or more additional connection ports, which are each provided with a coupling element for connecting one or more further hydraulic actuators to the jack, the jack furthermore being provided with an actuable valve which, in a first position, connects the pump to the lifting actuator and, in the second position, to one or more of the connection ports, so that, in the first position, the lifting actuator can be actuated and, in the second position, the one or more further hydraulic actuators connected to the jack can be actuated by operating the pump of the jack.

## Patentansprüche

1. Kraftfahrzeug das Folgendes aufweist: ein Fahrgestell (2') und ein Führerhaus (4'), das in Bezug auf das Fahrgestell gekippt werden kann, einen hydraulischen Kipp-Betätigungszylinder (6') der zwischen dem Fahrgestell (2') und dem Führerhaus (4') angeordnet ist, um das Führerhaus zu kippen, wobei der hydraulische Kipp-Betätigungszylinder (6') einen Anschluss oder mehrere Anschlüsse für die Zufuhr und/oder die Abfuhr von Hydraulikfluid hat; wobei das Kraftfahrzeug außerdem einen separaten, vorzugsweise tragbaren oder fahrbaren, hydraulischen Wagenheber hat, um einen Teil des Kraftfahrzeugs zu heben, z. B. im Fall einer Reifenpanne, wobei der Wagenheber einen hydraulischen Hebe-Betätigungszylinder (22) und eine Pumpe (20) aufweist, um dem hydraulischen Hebe-Betätigungszylinder (22) unter Druck stehendes Hydraulikfluid zuzuführen,
**dadurch gekennzeichnet, dass**
jeder Anschluss des hydraulischen Kipp-Betätigungszylinders (6') mit einem zugehörigen ersten Kopplungsglied (10, 11) verbunden ist, das am Kraftfahrzeug angeordnet ist, und dass der Wagenheber mit einem oder mehreren zweiten Kopplungsgliedern (24, 25) versehen ist, von welchen jedes mit einem ersten Kopplungsglied (10, 11) gekoppelt werden kann, in der Weise, dass die Pumpe (20) des Wagenhebers mit dem hydraulischen Kipp-Betätigungszylinder (6') verbunden und das Führerhaus (4') durch Betätigung der Pumpe (20) des Wagenhebers gekippt werden kann.

2. Kraftfahrzeug nach Anspruch 1,
in dem der Wagenheber mit einem Ventil versehen ist, das in einer ersten Position die Pumpe mit dem Hebe-Betätigungszylinder und in der zweiten Position mit dem zweiten Kopplungsglied oder den zweiten Kopplungsgliedern des Wagenhebers verbindet.

3. Kraftfahrzeug nach Anspruch 1 oder 2,
in dem ein betätigbares Rückschlagventil zwischen dem ersten Kopplungsglied und der Verbindung des Kipp-Betätigungszylinders vorgesehen ist, das, wenn Hydraulikfluid darin angefüllt ist, dazu führt, das Führerhaus nach vorne zu kippen.

4. Kraftfahrzeug nach einem der Ansprüche 1 bis 3,
in dem die ersten und zweiten Kopplungsglieder jeweils mit einem Verschlussglied versehen sind, wobei die Verschlussglieder jeweils geeignet sind, das korrespondierende Kopplungsglied geschlossen zu halten, wenn die Kopplungsglieder getrennt sind, und einen Fluidkanal zu öffnen, wenn die ersten und zweiten Kopplungsglieder miteinander gekoppelt sind.

5. Hydraulischer Wagenheber, vorzugsweise Flaschen (Bottle)-Wagenheber, der einen hydraulischen Hebe-Betätigungszylinder, eine Pumpe, um dem Hebe-Betätigungszylinder unter Druck stehendes Hydraulikfluid zuzuführen, und einen Behälter für Hydraulikfluid aufweist, wobei Hebe-Betätigungszylinder, Pumpe und Behälter starr aneinander gebunden sind und eine tragbare Einheit bilden, wobei die Einheit dafür bestimmt ist, auf dem Boden plaziert zu werden, um einen Gegenstand, insbesondere ein Kraftfahrzeug zu heben,
**dadurch gekennzeichnet, dass**
der Wagenheber mit einer oder mehreren zusätzlichen Anschlussöffnungen versehen ist, die jeweils mit einem Kopplungsglied versehen sind, um einen oder mehrere weitere hydraulische Betätigungszylinder an den Wagenheber anzuschließen, wobei der Wagenheber außerdem mit einem betätigbaren Ventil versehen ist, das in einer ersten Position die Pumpe mit dem Hebe-Betätigungszylinder und in der zweiten Position mit einem oder mehreren Anschlussöffnungen verbindet, so dass der Hebe-Betätigungszylinder in der ersten Position betätigt werden kann und der eine oder die mehreren weiteren hydraulischen Betätigungszylinder, die mit dem Wagenheber verbunden sind, in der zweiten Position durch den Betrieb der Pumpe des Wagenhebers betätigt werden können.

## Revendications

1. Véhicule comportant un châssis (2') et une cabine (4') qui peut être basculée par rapport au châssis, un actionneur de basculement hydraulique (6') étant agencé entre le châssis (2') et la cabine (4') pour le basculement de la cabine, lequel actionneur de basculement hydraulique (6') comporte une ou plusieurs connexions pour l'alimentation et/ou l'évacuation de fluide hydraulique, le véhicule ayant de plus un cric hydraulique séparé, de préférence portable ou muni de roues pour lever une partie du véhicule, par exemple dans l'éventualité d'un pneu à plat, lequel cric comporte un actionneur de levage hydraulique (22) et une pompe (20) pour alimenter du fluide hydraulique sous pression vers l'actionneur de levage hydraulique (6'), **caractérisé en ce que** chaque connexion de l'actionneur de basculement hydraulique est connectée à un premier élément d'accouplement associé (10, 11) agencé sur le véhicule, et **en ce que** le cric est muni d'un ou de plusieurs seconds éléments d'accouplement (24, 25) qui peuvent être accouplés à un premier élément d'accouplement, d'une manière telle que la pompe du cric peut être connectée à l'actionneur de basculement hydraulique, et la cabine peut être basculée par l'actionnement de la pompe du cric.

2. Véhicule selon la revendication 1, dans lequel le cric est muni d'une vanne qui connecte, dans une première position, la pompe à l'actionneur de levage et, dans la seconde position, au second élément d'accouplement ou aux seconds éléments d'accouplement du cric.

3. Véhicule selon la revendication 1 ou 2, dans lequel un clapet anti-retour pouvant être actionné est agencé entre le premier élément d'accouplement et la connexion de l'actionneur de basculement qui, lorsque du fluide hydraulique est alimenté vers celui-ci, amène la cabine à être basculée vers l'avant.

4. Véhicule selon l'une quelconque des revendications 1 à 3, dans lequel les premier et second(s) élément(s) d'accouplement sont chacun muni d'un élément de fermeture, lesquels éléments de fermeture sont chacun adaptés pour maintenir l'élément d'accouplement correspondant fermé lorsque lesdits éléments d'accouplement sont déconnectés, et pour ouvrir un passage de fluide lorsque les premier et second(s) élément(s) d'accouplement sont accouplés l'un à l'autre.

5. Cric hydraulique, de préférence un cric à bouteille, comportant un actionneur de levage hydraulique, une pompe pour alimenter du fluide hydraulique sous pression vers l'actionneur de levage, et un réservoir de fluide hydraulique, lequel actionneur de levage, laquelle pompe et lequel réservoir sont connectés de manière rigide les uns aux autres et forment une unité portable, l'unité étant conçue pour être placée sur le sol afin de lever un objet, en particulier un véhicule, **caractérisé en ce que** le cric est muni d'un ou de plusieurs orifices de connexion supplémentaires, qui sont chacun munis d'un élément d'accouplement pour connecter un ou plusieurs actionneurs hydrauliques au cric, le cric étant de plus muni d'une vanne pouvant être actionnée qui, dans une première position, connecte la pompe à l'actionneur de levage et, dans la seconde position, à un ou plusieurs des orifices de connexion de sorte que, dans la première position, l'actionneur de levage peut être actionné et, dans la seconde position, l'actionneur hydraulique ou les actionneurs hydrauliques connectés au cric peuvent être actionnés en faisant fonctionner la pompe du cric.
